**Europäisches Patentamt**

**European Patent Office**

**Office européen des brevets**

(19)

(11) Veröffentlichungsnummer: **0 099 039**
**B1**

(12) # EUROPÄISCHE PATENTSCHRIFT

(45) Veröffentlichungstag der Patentschrift:
**17.12.86**

(51) Int. Cl.⁴: **A 01 N 25/04,** A 01 N 25/02

(21) Anmeldenummer: **83106465.4**

(22) Anmeldetag: **02.07.83**

(54) **Verfahren zum Ausbringen von Pflanzenschutzmittelspritzbrühen durch Versprühen und Verpackungseinheit für Konzentrate.**

(30) Priorität: **09.07.82 DE 3225705**

(43) Veröffentlichungstag der Anmeldung:
**25.01.84 Patentblatt 84/4**

(45) Bekanntmachung des Hinweises auf die Patenterteilung:
**17.12.86 Patentblatt 86/51**

(84) Benannte Vertragsstaaten:
**AT BE CH DE FR GB IT LI LU NL SE**

(56) Entgegenhaltungen:
**EP-A-0 022 666**

**Die Akte enthält technische Angaben, die nach dem Eingang der Anmeldung eingereicht wurden und die nicht in dieser Patentschrift enthalten sind.**

(73) Patentinhaber: **A. Nattermann & Cie. GmbH, Nattermannallee 1, D-5000 Köln 30 (DE)**

(72) Erfinder: **Ghyczy, Miklos, Dr. Dipl.- Chem., Am Serviesberg 12, D-5000 Köln 41 (DE)**
Erfinder: **Imberge, Paul- Robert, Kiefernweg 5, D-5024 Pulheim (DE)**
Erfinder: **Wendel, Armin, Goethestrasse 29, D-5000 Köln 40 (DE)**

(74) Vertreter: **Sternagel, Hans- Günther, Dr., Patentanwälte Dr. Michael Hann Dr. H.- G. Sternagel Sander Aue 30, D-5060 Bergisch Gladbach 2 (DE)**

EP 0 099 039 B1

**Beschreibung**

Die Erfindung betrifft ein Verfahren zum Ausbringen von Pflanzenschutzmittelspritzbrühen, die neben den Wirkstoffen noch Phospholipide und weitere Hilfsstoffe enthalten, durch Spritzen auf Freilandflächen, insbesondere landwirtschaftliohe Nutzflächen oder Brachflächen und Freilandflächen, auf denen Pflanzenwachstum in bestimmter Weise reguliert werden oder Schädlinge bekämpft werden sollen.

Sie richtet sich auch auf Verpackungseinheiten, die in getrennten Behältern Wirkstoffkonzentrat und Phospholipidkonzentrat enthalten.

Wirkstoffzusammensetzungen, die aus Herbiziden, Fungiziden, Insektiziden, Nematiziden oder Acariziden in Kombination mit Phospholipiden neben üblichen Träger-, Verdünnungs-, Lösungs- und/oder anderen inerten Hilfsmitteln bestehen, sind in den deutschen Offenlegungsschriften 31 25 423, 31 25 399, 31 25 422, 31 25 448 und 31 25 447 beschrieben. Pflanzen-Schutzmittelsuspensionskonzentrats bestehend aus unlöslichen bzw. schwer löslichen Pestiziden mit einem Schmelzpunkt von > 40°C, einem Phospholipid und einem organischen Lösungsmittel bzw. Lösungsmittelgemisch sind in der deutschen Offenlegungsschrift 31 50 990 beschrieben.

In der Patentanmeldung WO 80/02360 ist beschrieben, daß man Agrikulturchemikalien zusammen mit Zusätzen auf die zu behandelnden Flächen aufbringen soll, um die Wirkung zu verbessern. Als Zusätze dienen Filmbildner, die den Wirkstoff auf den Pflanzen fixieren und Mengen an oberflächenaktiven Substanzen, die ausreichend sind, um die physikalisch-chemische Struktur der Zellen an der Oberfläche der Pflanzen zu verändern. Als geeignete oberflächenaktive Substanzen sind Kondensationsprodukte von Alkylenoxid mit Fettalkoholen, Aminen, Teilestern von langkettigen Fettsäuren mit Glycerin, Sorbitan, Zuckern, Pentaerythrit, sowie die nicht umgesetzten Reaktionspartner von Alkylenoxid, Natrium- und. Calciumsalze von Polyacrylsäuren und Ligninsulfosäuren und zahlreiche weitere Stoffe, u.a. auch Lecithin genannt.

In EP-A-22 666 ist eine Pflanzenschutzmittel enthaltende Zusammensetzung be schrieben, die neben Wirkstoff ein oberflächenaktives Mittel enthält. Als geeignete Mittel sind unter anderen Kondensationsprodukte von Ethylenoxid mit Fettalkoholen oder Alkylphenolen, Partiale ster von langkettigen Fettsäuren, Lecithin, Fettsäureester von Glycerolsorbitan und Zucker und deren Kondensationsprodukte mit Ethylenoxid oder Propylenoxid genannt. Durch den Zusatz von oberflächenaktiven Mittel wird die Struktur der Pflanzenoberfläche modifiziert und die Wirkung des Pflanzenschutzmittels verbessert.

In dieser Druckschrift ist das Abtriftproblem beim Austragen der Spritzbrühen nicht erwähnt.

Aus DE-OS 29 07 303 bzw. US-PS 4 241 046 ist ein Verfahren zum Einkapseln biologisch aktiver Substanzen in synthetischen oligolamellaren Lipidbläschen (synthetische Liposomen) bekannt, bei dem eine Phospholipidlösung in einem organischen Lösungsmittel und eine wäßrige Zubereitung der einzukapselnden Substanz gemischt und zu einer W/O-Emulsion emulgiert werden. Nach Entfernung des organischen Lösungsmittels entsteht ein viskoses Gel, das in Wasser suspendiert wird. Als biologisch aktive Substanzen sind unter anderem Pestizide genannt. Der Nachteil dieses Verfahrens besteht darin, daß nur wäßrige Zubereitungen von biologisch aktiven Substanzen eingekapselt werden können, das Verfahren eine aufwendige Technik verlangt und die nach Abdampf en des organischen Lösungsmittels erhaltenen Gele nur beschränkt und unter besonderen Bedingungen lagerfähig sind. Für seine Anwendung auf handelsübliche Wirkstoffkonzentrate ist das Verfahren durch die aufwendige komplizierte Technik überhaupt nicht brauchbar. In Form der suspendierten Gele lassen sich die eingekapselten Wirkstoffe im Falle von agrikulturchemischen Produkten allein aus Kosten- und Haltbarkeitsgründen nicht in den Mandel bringen.

Pflanzenschutzmittel zur Bekämpfung von Schädlingen und Unkräutern werden heute wegen der einfachen Handhabung bei Transport, Lagerung und Verwendung als Wirkstoffkonzentrate in Form von Emulsionen (EC), Suspensionen (SC), Lösungen (LC) oder leicht benetzbaren Pulvern (WP) in den Handel gebracht und in der Regel in flüssiger Form z.B. als Lösungen, Suspensionen oder Emulsionen ausgetragen. Dazu werden die Konzentrate vor dem Ausbringen mit der vorgeschriebenen Menge Wasser verdünnt oder benetzt und dann als sogenannte Spritzbrühe mit üblichen Geräten von Land oder auch aus der Luft (Flugzeug oder Hubschrauber) versprüht.

Die meisten Spritzbrühen haben den Nachteil, daß mit den bekannten Spritzvorrichtungen nur so kleine Tröpfchen erzeugt werden können, daß der erzeugte Sprühnebel, insbesondere durch Windeinwirkang, abgetrieben wird und die zu behandelnden landwirtschaftlichen Flächen nicht ausreichend benetzt und zusätzliche Gebiete besprüht werden.

Bekannt ist weiterhin die indirekte Abtrift von aufgebrachten Mitteln, die infolge ihrer Flüchtigkeit wieder teilweise verdampfen und durch den Austausch von Luftmassen mit dem Wind auf benachbarte Gebiete abgetrieben werden. Je nach Flüchtigkeit der Präparate sind entsprechend höhere Dosierungen erforderlich, um noch ausreichende Wirkstoffmengen auf den Zielflächen zu behalten. Dies stellt eine unnötige Umweltbelastung dar, und häufig treten auf den eigentlich nicht zu behandelnden Flächen durch die ausgetragenen Wirkstoffe Schäden der dort vorhandenen Vegetation und Fauna auf, so daß sich an sich notwendige Spritzbehandlungen bei Vorliegen ungünstiger klimatischer Bedingungen nicht zum richtigen Zeitpunkt ausführen lassen.

Es ist grundsätzlich bekannt, daß sich das Abdriften der Sprühnebel durch Vergrößerung der Tröpfchengröße verringern läßt. Colthurst und Mitarbeiter beschreiben in ihrer Veröffentlichung "Water-in-oil Emulsions and the Control of Spray Drift" (SCI Monograph No. 21, s. 47 ff., Soc. Chem. Ind. 1966, London), daß sich stabile Tröpfchen, deren Größe sich nach Verlassen der Spritzdüse nicht wesentlich verringert, erzeugen lassen, wenn Wasser-in-Öl-Emulsionen (W/O-Emulsionen) mittels einer speziellen in GB-PS 944 229 beschriebenen Düse erzeugt werden. Diese Vorrichtung ist so ausgebildet, daß die Öl- und die Wasserphase in einer kleinen Mischkammer unmittelbar vor der Düse zusammengeführt und emulgiert werden. Die konstruktive Lösung der Austragsvorrichtung erfordert jedoch spezielle Formulierungen der Wirkstoffe, wobei Ölphase, Lösungsmittel und Emulgator so ausgewählt werden müssen, daß eine der Scherbelastung in der Düse widerstehende W/O-Emulsion in der Kürze der zur Verfügung stehenden Zeit in der Mischkammer überhaupt gebildet werden kann.

Aus DE-A 24 22 954 ist es bekannt, Pflanzenschutzmittelspritzbrühen mit speziellen oberflächenaktiven Substanzen zu versehen, um das Abtriftproblem beim Austragen zu. lösen. Auch in diesem Falle ist es erforderlich, speziell ausgebildete Austragvorrichtungen zu verwenden, um ausreichend stabile Tröpfchen einer Größe zu erzielen, die eine geringe Abtrift aufweisen.

Die Formulierung von Wirkstoffen in Form flüssiger, leicht verdünnbarer Konzentrate oder als leicht benetzbare Pulver erfolgt durch die enschlägigen Hersteller der Wirkstoffe, die auf ihren Packungen und den Prospektunterlagen angeben, in welchem Verhältnis die Konzentrate mit Wasser jeweils verdünnt oder benetzt werden müssen, um die beabsichtigte Wirkung nach dem Ausbringen und Auftragen auf Pflanzen und Böden zu erreichen. Die von Colthurst vorgeschlagene Form des Ausbringens als W/O-Emulsionen hat den Nachteil, daß nicht nur eine spezielle Austragsvorrichtung erforderlich ist, sondern daß zusätzlich spezielle Formulierungen notwendig sind, um stabile W/O-Emulsionen zu erzeugen.

Das in DE-OS 29 07 303 beschriebene Einkapselungsverfahren ist als Vorstufe vor dem Ausbringen von Spritzbrühen unbrauchbar.

Es besteht deshalb ein dringendes Bedürfnis nach einem Austragsverfahren, das weder spezielle Vorrichtungen noch eine Anpassung der Formulierungen an spezielle Misch- und Austragsvorrichtungen erfordert.

Aufgabe der Erfindung ist es, geeignete Verpackungseinheiten für Wirkstoffe und ein Verfahren zum Ausbringen von Pflanzenschutzmittelspritzbrühen zu schaffen, das die Verwendung der bekannten erhältlichen Wirkstoffkonzentrate erlaubt und bei dem das Ausbringen so erfolgt, daß ausreichend große und stabile Tröpfchen erzeugt werden, sodaß das Abdriften des Sprühnebels beim Ausbringen auf Freilandflächen stark verringert ist.

Diese Aufgabe wird gelöst durch ein Verfahren zum Ausbringen von wässrigen Pflanzenschutzmittelspritzbrühen. die neben Wirkstoffen noch Phospholipide und weitere Hilfsstoffe enthalten, bei dem man handelsübliche Wirkstoffkonzentrate, Phopholipide und weitere Hilfsstoffe und Wasser miteinander mischt und mittels üblicher Spritzvorrichtungen austrägt,

dadurch gekennzeichnet, daß man ein flüssiges Phospholipidkonzentrat im Gewichtsverhältnis Wirkstoff: Phospholipide 1:0.5 bis 1:5 verwendet, das

a) 20 bis 60 Gew. % bezogen auf Konzentrat an Phosphatidylcholin oder eines Phospholopidgemischs aus 20-98% Phosphatidylcholin und sonstigen Phospholipiden aus der Gruppe hydriertes Phosphatidylcholin, Phosphatidylethanolamin, N-Acylphosphatidylethanolamin, Phosphatiidylinosit, Phosphatidylserin und Phosphatidylglycerol und

b) Glycerin als physiologisch unbedenkliches Lösungsmittel und gegebenenfalls eines oder mehrere Lösungsmittel aus der Gruppe $C_1$ bis $C_4$ Alkohole, Ethylenglykol, Butylenglykol, Ethylenglykolmonoethylether, Ethylenglykoldimethylether, Ethylenglykoldiethylether, Diethylenglykoldimethylether, Diethylenglykolmonoethylether, Diethylenglykolmonomethylether, Diethylenglykolpropylether, Diethylenglykoldiethylether, Polyethylenglykol, Propylenglykole, Propylenglykolmonomethylether, Propylenglykolmonoethylether, Propylenglykoldimethylether, Propylenglykoldiethylether, Tetrahydrofuran, Dioxan, Dimethylsulfoxid, 3,5,5-Trimethyl-2-cyclohexen-1-on und

c) einen nicht-ionogenen Co-Emulgator aus der Gruppe von Ethoxylaten von Fettalkoholen, hydriertem Rizinusöl, Nonylphenol oder Fettsäureamide, und

d) Lösungsvermittler aus der Gruppe der Sorbitanfettsäureester, der Triglycerid- oder Partialglyceridgemische gesättigter Fettsäuren und Hydroxyethylamide enthält.

Bevorzugte Ausführungsformen der erfindungsgemäßen Arbeitsweise sind in den Unteransprüchen beschrieben.

Die Erfindung schließt auch eine geeignete Verpackungseinheit für Wirkstoffkonzentrate von Pflanzenschutzmittel ein, die ein handelsübliches Wirkstoffkonzentrat enthält und

dadurch gekennzeichnet ist, daß die Verpackungseinheit in voneinander getrennten Räumen das handelsübliche Wirkstoffkonzentrat und ein flüssiges Phospholipidkonzentrat, im Gewichtsverhältnis Wirkstoff: Phospholipide 1:0.5 bis 1:5 enthält und das Phospholipidkonzentrat

a) 20 - 60 Gew. % bezogen auf das Konzentrat an Phosphatidylcholin oder eines Phospholipid-Gemischs aus 20-98 Gew.-% aus der Gruppe Phosphatidylcholin, hydriertes Phosphatidylcholin, Phosphatidylethanolamin, N-Acylphosphatidylethanolamin, Phosphatidylinosit, Phosphatidylserin und Phosphatidylglycerol, und

b) Glycerin als physiologisch unbedenkliches Lösungsmittel und gegebenenfalls eines oder mehrere Lösungsmittel aus der Gruppe $C_1$ bis $C_4$ Alkohole, Ethylenglykol, Butylenglykol, Ethylenglykolmonoethylether, Ethylenglykoldimethylether, Ethylenglykoldiethylether, Diethylenglykoldimethylether, Diethylenglykolmonoethylether, Diethylenglykolmonomethylether, Diethylenglykolpropylether, Diethylenglykoldiethylether, Polyethylenglykol, Propylenglykole, Propylenglykolmonoethylether, Propylenglykolmonoethylether, Propylenglykoldimethylether, Propylenglykoldiethylether, Tetrahydrofuran, Dioxan, Dimethylsulfoxid, 3,5,5-Trimethyl-2cyclohexen-1-on, und

3

c) einen nicht-ionogenen Co-Emulgator aus der Gruppe von Ethoxylaten von Fettalkoholen, hydriertem Rizinusöl, Nonylphenol oder Fettsäureamide, und

d) Lösungsvermittler aus der Gruppe der Sorbitanfettsäureester, der Triglycerid- oder Partialglyceridgemische gesättigter Fettsäuren und Hydroxyethylamide enthält.

Es wurde überraschend gefunden, daß man das Besprühen von Freilandflächen mit Wirkstoffen, wie Pflanzenschutzmitteln, wesentlich verbessern kann, wenn man die üblichen Spritzbrühen derart aufträgt, daß beim Austragen ein in die Spritzbrühe eingemischtes Phospholipidkonzentrat gleichzeitig mit ausgetragen wird.

Die handelsüblichen Wirkstoffkonzentrate werden zunächst in Übereinstimmung mit den Angaben der Hersteller mit der entsprechenden Menge Wasser verdünnt, oder im Falle von Pulvern mit Wasser benetzt und Wirkstoffemulsionen oder -suspensionen erzeugt. Zu diesen Spritzbrühen werden dann zusätzlich ein Phospholipidkonzentrat als Konzentrat oder ebenfalls verdünnt hinzugefügt und austragfähige Spritzbrühenerzeugt. Das Einmischen der Phospholipidkonzentrate kann in üblichen Mischgefäßen oder dem die übliche verdünnte Spritzbrühe enthaltenden Behälter erfolgen. Das Einbringen von Phospholipidkonzentrat in zu wäßrigen Spritzbrühen verdünnten Wirkstoffkonzentraten kann vorzugsweise in sogenannten statischen Mischern ausgeführt werden. Bei einer Verfahrensführung sind zwei Behälter für das Verdünnen der Konzentrate mit Wasser vorhanden. Der Behälter mit der Wirkstoffemulsion oder -suspension und der Behälter mit dem verdünnten Phospholipidkonzentrat sind über Leitungen und ein Pumpensystem derart verbunden, daß die beiden Flüssigkeiten getrennt über ein Leitungssystem zu einer Mischdüse geführt werden, wo die Austragsbrühe erzeugt wird und anschließend mittels üblicher Spritzvorrichtungen ausgetragen wird.

Das erfindungsgemäße Verfahren hat den Vorteil, daß die Aufwandmenge an Wirkstoff 30 bis 50%, in manchen Fällen sogar bis 80% reduziert werden kann, denn durch die Mitverwendung von Phospholipiden beim Austragen werden die Wirkstoffe wesentlich besser verteilt, obwohl der Anteil feinster Tröpfchen erheblich verringert ist. Die Benetzung der Pflanzen und des Bodens ist verbessert, so daß die Selektivität und die Aktivität der Wirkstoffe vergrößert wird. Die Anwesenheit von Phospholipiden verringert die Verkleinerung der Tröpfchen des Sprühnebels nach Verlassen der Düse bis zum Niederschlagen auf Pflanzen und Boden durch Verzögerung des Abdampfens von erheblichen Flüssigkeitsmengen aus den Tröpfchen.

Bei den Wirkstoffen handelt es sich um Pflanzenschutzmittel in üblichen Lösungs-, Emulsions-, Suspensionskonzentraten, oder benetzbaren Pulvern mit herbiziden, fungiziden, insektiziden, acariziden oder nematiziden Wirkstoffen.

Als Phospholipide werden Phosphatidylcholin oder natürliche oder synthetische Phospholipid-Gemische mit 20-98 Gew.-% Phosphatidylcholin, und sonstige Phospholipide aus der Gruppe hydrierte Phosphatidylcholine, Phosphatidylethanolamin, den N-Acylphosphatidylethanolaminen, Phosphatidylinosit, Phosphatidylserin und Phosphatidylglycerol verwendet. Besonders bevorzugt sind natürliche Phosphatidylcholine, die nach den in den folgenden Patenten beschriebenen Verfahren erhalten werden können: DE-PS 10 47 597, DE-PS 10 53 299, DE-PS 16 17 679, DE-PS 16 17 680, DE-OS 30 47 048, DE-OS 30 47 012 oder DE-OS 30 47 011.

Als N-Acyl-phosphatidylethanolamine werden insbesondere diejenigen verwendet, in denen die Acylgruppe sich von gesättigten oder olefinisch ungesättigten Fettsäuren mit 2 bis 20 Kohlenstoffatomen, insbesondere die gesättigten mit 2 bis 5 Kohlenstoffatomen oder die gesättigten oder einmal olefinisch ungesättigten mit 14, 16, 18 oder 20 Kohlenstoffatomen ableitet.

Die Phospholipide werden zur Herstellung flüssiger Zubereitungen in Glycerin und gegebenenfalls eines oder mehrere physiologisch unbedenkliche, organische Lösungsmittel aus der Gruppe $C_1$-$C_4$-Alkohole (z.B. Methanol, Ethanol, Propanol, Isopropanol, Butanol, Isobutanol, tert. Butanol, sec. Butanol), Ethylenglykol, Ethylenglykolmonoethylether, Ethylenglykoldimethylether, Ethylenglykoldiethylether, Diethylenglykoldimethylether, Diethylenglykolmonoethylether, Diethylenglykolmonomethylether, Diethylenglykolpropylether, Diethylenglykoldiethylether, Polyethylenglykol, Propylenglykole, Propylenglykolmonomethylether, Propylenglykolmonoethylether, Propylenglykoldimethylether, Propylenglykoldiethylether, Butylenglykol, Tetrahydrofuran, Isophoron, Dioxan und Dimethylsulfoxid eingebracht.

Bevorzugt sind Mischungen aus Isophoron, Glycerin und gegebenenfalls $C_1$-$C_3$-Alkoholen.

Die Phospholipidkonzentrate weisen eine Konzentration von etwa 20 bis etwa 60 Gew.-% Phospholipiden auf, um gut handhabbar und pumpfähig zu sein.

Die Phospholipidkonzentrate enthalten neben den Phospholipiden und den als Trägerflüssigkeit dienenden Lösungsmitteln einen Co-Emulgator und einen Lösungsvermittler und gegebenenfalls weitere geeignete Zusätze, wie pflanzliche Öle oder geringe Mengen Wasser. Als Co-Emulgatoren dienen nichtionogene Produkte wie die unter der Handelsbezeichnung Cremophor angebotenen Produkte, bei denen es sich um Ethoxylate von Fettalkoholen bzw. hydriertem Rizinusöl bzw. Nonylphenol oder Fettsäureamide handelt. Als Lösungsvermittler können Handelsprodukte wie Tween®, Softigen®, Span®, Miglyol®, Marlowet® und dergleichen verwendet werden. Dabei handelt es sich um Sorbitanfettsäureester, Triglycerid- oder Partialglyceridgemische gesättigter Pflanzenfettsäuren oder Hydroxyethylamide, wie z.B. N-(2-Hydroxyethyl)capronsäureamid.

Um die beabsichtigte Wirkung beim Herstellen der austragfähigen Spritzbrühen und beim Austragen zu erreichen, wird eine solche Menge an Phospholipidkonzentrat eingesetzt, daß das Verhältnis von Wirkstoff: Phospholipid in der endgültigen Spritzbrühe 1:0,5 bis 1:5 beträgt. Vorzugsweise wird ein Verhältnis von 1:1 bis 1:2 eingestellt.

4

Die· Angaben der Hersteller zu den Wirkstoffkonzentraten ermöglichen es, ohne Schwierigkeiten die gewünschte Menge an Phospholipidkonzentrat auszuwählen, die erforderlich ist, um die vorstehend genannten Verhältnisse von Wirkstoff: Phospholipid einzustellen.

Vorzugsweise werden die Pflanzenschutzmittel jedoch in Kombinationspackungen mit Phospholipidkonzentraten in jeweils voneinander getrennten Behältern abgefüllt, so daß das richtige Konzentrationsverhältnis von Wirkstoffkonzentrat und Phospholipid für das jeweilige Wirkstoffkonzentrat vom Hersteller in die Kombinationspackung eingefüllt wird und Fehler beim Verdünnen durch weniger sachkundige Anwender auf diese Weise weitgehend ausgeschlossen werden.

Derartige Kombinationspackungen weisen Innerhalb eines Behälters zwei voneinander getrennte, in sich abgeschlossene Füllräume auf. Je nach konstruktiver Gestaltung der Verpackung ist eine getrennte Entnahme zur Überführung in separate Ansetzbehälter der Spritzvorrichtung möglich, oder aber eine gemeinsame Entnahme unter Mischen der Komponenten zum Einbringen in den Verdünnungs- und Vorratsbehälter einer Spritzvorrichtung, in der das Verdünnen auf die Endkonzentration mittels Wasser erfolgt. Die Kombinationspackung kann jedoch auch so ausgebildet sein, daß in einer Außenverpackung zwei getrennte Behälter angeordnet sind, wobei dieses Wandmaterial wasserlöslich oder in Wasser zerfallend sein kann, so daß die Behälter ohne vorheriges Öffnen in die mit entsprechenden Wassermengen gefüllten Misch- oder Vorratsbehälter eingebracht werden können.

Für das erfindungsgemäße Verfahren und die Kombinationspackung geeignete Phospholipidkonzentrate haben beispielsweise folgende Zusammensetzungen:

1. 40 Gew.% Phospholipide
35 Gew.% Isophoron (3,5,5-Trimethyl-2-cyclohexen-1-on)
15 Gew.% Glycerin
5 Gew.% Co-Emulgator
5 Gew.% Lösungsvermittler
2. 26,6 Gew.% Phospholipide
10 Gew.% Glycerin
23,4 Gew.% Isophoron
3,3 Gew.% Co-Emulgator
3,3 Gew.% Lösungsvermittler
13,4 Gew.% Wasser
20 Gew.% Pflanzenöl
3. 26,6 Gew.% Phospholipide
10 Gew.% Glycerin
23,4 Gew.% Isophoron
20 Gew.% Neutralöl
3,3 Gew.% Co-Emulgator
3,3 Gew.% Lösungsvermittler
13,4 Gew.% Wasser
4. 32 Gew.% Phospholipide
15 Gew.% Glycerin
35 Gew.% Isophoron
5 Gew.% Co-Emulgator
5 Gew.% Lösungsvermittler
8 Gew.% Ethanol
5. 40 Gew.% Phospholipide
15 Gew.% Glycerin
35 Gew.% Go-Emulgator
5 Gew.% Lösungsvermittler

Das erfindungsgemäße Verfahren der Kombination mit Phospholipiden beim Ausbringen hat sich besonders bewährt für folgende Wirkstoffe:

| Übliche Wirkstoff-bezeichnung | Konzentratform | mg/l Wirkstoff in Spritzbrühe |
|---|---|---|
| **Fungizide** | | |
| Triadimefon | Spritzpulver | 250 |
| Kupferoxychlorid | benetzbares Pulver | 1350 |
| Propineb | benetzbares Pulver | 1400 |
| Procymidone | benetzbares Pulver | 375 |
| Netz-Schwefel | benetzbares Pulver | 2000 |
| **Herbizide** | | |
| Glyphosat | wäßrige Lösung | 4800 |
| Linuron | Spritzpulver | 1763 |
| Terbuthylazin | Suspension | 10000 |
| Flampropisopropyl | Emulsion | 1750 |
| Trifluralin | Emulsion | 3216 |
| Dinoseb-acetat | Emulsion | 4920 |
| Chlormequatchlorid | wäßrige Lösung | 7800 |
| Chloridazon | Suspension | 6450 |
| Isoproturon | benetzbares Pulver | 5025 |
| Alloxydim-Na | lösliches Pulver | 6563 |
| Atrazin | benetzbares Pulver | 3600 |
| **Insektizide** | | |
| Malathion | Emulsion | 20400 |
| Propoxur | Emulsion | 400 |
| Permethrin | Emulsion | 225 |
| Cypermethrin | Emulsion | 240 |
| Heptenophos | Emulsion | 1000 |

**Beispiel 1**

Aus einem handelsüblichen Spritzpulver mit 25% Triadimefon als aktivem Wirkstoff wird eine erste Spritzbrühe mittels Wasser hergestellt, die 250 mg/l Wirkstoff enthält.

Aus einem Phospholipidkonzentrat der vorstehend wiedergegebenen Zusammensetzung Nr. 1 wird mittels Wasser eine zweite Spritzbrühe bereitet, die 250 mg/l Phospholipid enthält.

Die beiden Spritzbrühen werden aus zwei gleichartigen Tanks durch einen statischen Mischer geführt und homogenisiert und wie üblich verdüst. Die Spritzbrühe ist gut austragfähig, und es läßt sich eine Tröpfchengröße einstellen, bei der nur ein geringer Anteil an Tröpfchen kleiner als 200 Mikrometer ist.

**Beispiel 2**

Eine Verpackungseinheit enthält in voneinander getrennten Behältern eine konzentrierte Emulsion von Trifluralin und ein Phospholipidkonzentrat der Zusammensetzung Nr. 4 in solchen Mengen, daß die fertige Spritzbrühe das Herbizid und die Phospholipide im Verhältnis 1:2 enthält. Die beiden Konzentrate werden mit Wasser zu Spritzbrühen mit Gehalten von 3216 mg/l und 6432 mg/l verdünnt und aus getrennten Behältern einer Mischdüse zugeführt und zu einer homogenen Spritzbrühe vermischt und anschließend als Sprühnebel ausgetragen. Die Erzeugung einer homogenen Spritzbrühe war ohne Schwierigkeiten durch eine übliche Mischdüse möglich und die erhaltene Spritzbrühe gut austragbar.

**Beispiel 3**

Eine handelsübliche Emulsion des Insektizides Malathion wurde den Angaben des Herstellers entsprechend mit Wasser zu einer Spritzbrühe mit einem Gehalt von 20400 mg/l verdünnt. In die Spritzbrühe wurde ein Phospholipidkonzentrat der Zusammensetzung Nr. 2 in einer solchen Menge eingebracht, daß das Verhältnis von Insektizid: Phospholipid 1:0,5 beträgt. Das Einrühren erfolgt in einem Behälter mit Rührer. Die erhaltene Spritzbrühe läßt sich ohne Schwierigkeiten mit üblichen Einrichtungen vernebeln, wobei der Anteil an Tröpfchen unter 200 Mikrometer klein gehalten werden kann, so daß ein verringertes Abdriften des Sprühnebels beim Ausbringen zu beobachten ist.

Im Rahmen weiterer Versuche wurde festgestellt, daß sich die zuvor genannten Pflanzenschutzmitteln mit jeweils geeigneten Phospholipidkonzentraten unterschiedlicher Zusammensetzung unter Verwendung der erfindungsgemäßen Verfahrensweise in gut austragbare Spritzbrühen umwandeln lassen, wobei das Mischen und Austragen mit den bekannten üblichen Vorrichtungen erfolgen kann. Dem Fachmann bereitet es keine Schwierigkeiten, aus den angegebenen Phospholipidkonzentraten unterschiedlicher Zusammensetzung dasjenige auszuwählen, das eine optimal austragfähige Spritzbrühe ergibt. Um eine solche Auswahl zu erleichtern, werden Wirkstoffkonzentrat und Phospholipidkonzentrat vorzugsweise in Verpackungseinheiten angeboten, die aufeinander abgestimmte Mengen und Zusammensetzungen der Konzentrate enthalten. Dadurch ist dem Endanwender die Handhabung wesentlich erleichtert. Das Mischen, Verdünnen und Austragen kann mit den bekannten üblichen Vorrichtungen erfolgen. Es lassen sich Sprühnebel mit geringen Anteilen an kleinen Tröpfchen unterhalb 200 Mikrometer erzeugen, die Tröpfchengröße verringert sich während des Niederschlags des Sprühnebels nur wenig, weil die Anwesenheit des Phospholipids die Tröpfchengröße stabilisiert. Durch die erfindungsgemäße Verfahrensweise wird nicht nur das Abdriften der Sprühnebel beim Ausbringen vermindert, sondern auch die indirekte Abdrift der aufgebrachten Wirkstoffe, wie sie beispielsweise im Sonderheft VII der Zeitschrift für Pflanzenkrankheiten und Pflanzenschutz 1975 von G. Maas und anderen beschrieben wurde.

Ein besonderer Vorteil der erfindungsgemäßen Arbeitsweise besteht darin, daß die Verwendung von Phospholipidkonzentraten zum Herstellen von Spritzbrühen die üblichen und vorhandenen Einrichtungen ohne Schwierigkeiten benutzt werden können, wobei keine Abwandlung der handelsüblichen Formulierungen der Wirkstoffe erforderlich sind, um die Kombination mit Phospholipidkonzentration in den Spritzbrühen zu ermöglichen.

**Patentansprüche**

1. Verfahren zum Ausbringen von wäßrigen Pflanzenschutzmittelspritzbrühen, die neben den Wirkstoffen noch Phospholipide und weitere Hilfsstoffe enthalten, bei dem man handelsübliche Wirkstoffkonzentrate, Phopholipide und weitere Hilfsstoffe und Wasser miteinander mischt und mittels üblicher Spritzvorrichtungen austrägt,

dadurch gekennzeichnet, daß man ein flüssiges Phospholipidkonzentrat im Gewichtsverhältnis Wirkstoff: Phospholipide 1:0.5 bis 1:5 verwendet, das

7

a) 20 bis 60 Gew. % bezogen auf Konzentrat an Phosphatidylcholin oder eines Phospholopid-Gemischs aus 20-98 Gew.-% Phosphatidylcholin, und sonstigen Phospholipiden aus der Gruppe hydriertes Phosphatidylcholin, Phosphatidylethanolamin, N-Acylphosphatidylethanolamin, Phosphatidylinosit, Phosphatidylserin und Phosphatidylglycerol und

b) Glycerin als physiologisch unbedenkliches Lösungsmittel und gegebenenfalls eines oder mehrere Lösungsmittel aus der Gruppe $C_1$ bis $C_4$ Alkohole, Ethylenglykol, Butylenglykol, Ethylenglykolmonoethylether, Ethylenglykoldimethylether, Ethylenglykoldiethylether, Diethylenglykoldimethylether, Diethylenglykolmonoethylether, Diethylenglykolmonomethylether, Diethylenglykolpropylether, Diethylenglykoldiethylether, Polyethylenglykol, Propylenglykole, Propylenglykolmonomethylether, Propylenglykolmonoethylether, Propylenglykoldimethylether, Propylenglykoldiethylether, Tetrahydrofuran, Dioxan, Dimethylsulfoxid, 3,5,5-Trimethyl-2-cyclohexen-1-on, und

c) einen nicht-ionogenen Co-Emulgator aus der Gruppe von Ethoxylaten von Fettalkoholen, hydriertem dizinusöl, Nonylphenol oder Fettsäureamide, und

d) Lösungsvermittler aus der Gruppe der Sorbitanfettsäureester, der Triglycerid- oder Partialglyceridgemische gesättigter Fettsäuren und Hydroxyethylamide enthält.

2. Verfahren nach Anspruch 1,

dadurch gekennzeichnet, daß man das verdünnte Wirkstoffkonzentrat und das Phospholipidkonzentrat in einen statischen Mischer zusammenführt und eine Spritzbrühe bildet.

3. Verfahren nach Anspruch 1,

dadurch gekennzeichnet, daß man die getrennten Flüssigkeiten in einer Mischdüse zusammenführt und eine Spritzbrühe bildet.

4. Verfahren nach Ansprüchen 1 bis 3,

dadurch gekennzeichnet, daß man die Konzentrate aus getrennten Behältern einer Verpackungseinheit zusammenführt.

5. Verfahren nach Ansprüchen 1 bis 4,

dadurch gekennzeichnet, daß man als Phospholipid Phosphatidylcholin oder Mischungen aus Phosphatidylcholin und Phosphatidylethanolamin oder Mischungen aus Phosphatidylcholin/ Phosphatidylethanolamin und N-Acylphosphatidylethanolamin verwendet.

6. Verfahren nach Ansprüchen 1 bis 5,

dadurch gekennzeichnet, daß man eine solche Menge an Phospholipidkonzentrat verwendet, daß das Gewichtsverhältnis von Wirkstoff zu Phospholipidgemisch 1:1 bis 1:2 beträgt.

7. Verpackungseinheit für Wirkstoffkonzentrate von Pflanzenschutzmitteln, enthaltend ein handelsübliches Wirkstoffkonzentrat,

dadurch gekennzeichnet, daß die Verpackungseinheit in voneinander getrennten Räumen das handelsübliche Wirkstoffkonzentrat und ein flüssiges Phospholipidkonzentrat, im Gewichtsverhältnis Wirkstoff: Phospholipide 1:0.5 bis 1:5 enthält und das Phospholipidkonzentrat

a) 20 - 60 Gew. % bezogen auf das Konzentrat an Phosphatidylcholin oder eines Phospholipid-Gemischs aus 20-98 Gew.% Phosphatidylcholin und sonstigen Phospholipiden aus der Gruppe hydriertes Phosphatidylcholin, Phosphatidylethanolamin, N-Acylphosphatidylethanolamin, Phosphatidylinosit, Phosphatidylserin und Phosphatidylglycerol und

b) Glycerin als physiologisch unbedenkliches Lösungsmittel und gegebenenfalls eines oder mehrere Lösungsmittel aus der Gruppe $C_1$ bis $C_4$ Alkohole, Ethylenglykol, Butylenglykol, Ethylenglykolmonoethylether, Ethylenglykoldimethylether, Ethylenglykoldiethylether, Diethylenglykoldimethylether, Diethylenglykolmonoethylether, Diethylenglykolmonomethylether, Diethylenglykolpropylether, Diethylenglykoldiethylether, Polyethylenglykol, Propylenglykole, Propylenglykolmonoethylether, Propylenglykolmonoethylether, Propylenglykoldimethylether, Propylenglykoldiethylether, Tetrahydrofuran, Dioxan, Dimethylsulfoxid, 3,5,5-Trimethyl-2cyclohexen-1-on, und

c) einen nicht-ionogenen Co-Emulgator aus der Gruppe von Ethoxylaten von Fettalkoholen, hydriertem Rizinusöl, Nonylphenol oder Fettsäureamide, und

d) Lösungsvermittler aus der Gruppe der Sorbitanfettsäureester, der Triglycerid- oder Partialglyceridgemische gesättigter Fettsäuren und Hydroxyethylamide enthält.

8. Verpackungseinheit nach Anspruch 7,

dadurch gekennzeichnet, daß das Gewichtsverhältnis von Wirkstoff:Phospholipid 1:1 bis 1:2 beträgt.

## Claims

1. A method for the discharge of aqueous plant protectant spray mixtures comprising besides the effective compound phospholipides and further auxiliary products by mixing commerical effective compound concentrates, phospholipides and further auxiliary products and water and discharging the spray mixtures with common spray devices,

characterized in that

a liquid phospholipid concentrate is used with the weight ratio effective compound: phospholipides of from 1:0.5 to 1:5 which comprises

a) of from 20 to 60 weight percent based on the concentrate of phosphatidyl choline or of a mixture of phospholipides containing from 20 to 98 weight percent phosphatidyl choline and other phospholipides selected from the group hydrogenated phosphatidyl choline, phosphatidyl ethanolamine, N-acylphosphatidyl ethanolamine, phosphatidyl inositol, phosphatidyl serine and phosphatidyl glycerol and

b) glycerin as physiologically acceptable solvent and if necessary one or more solvents selected from the group $C_1$ to $C_4$ alcohols, ehtylene glycol, butylene glycol, ethylene glycol monoethylether, ethylene glycol dimethylether, ethylene glycol diethylether. diethylene glycol dimethylether, diethylene glycol monoethylether, diethylene glycolmonomethylether. diethylene glycol propylether, diethylene glycol diethylether, polyethylene glycol, propylene glycols, propylene glycol monomethylether, propylene glycol monoethylether. propylene glycol dimethylether. propylene glycol diethylether, tetrahydrofurane, dioxane dimethyl sulfoxide. 3,5,5-trime-thyl-2-cyclohexene-1-on, and

c) a non-ionogenic co-emulsifier selected from the group ethoxylates of fatty alcohols, hydrogenated castor oil, nonyl phenol or fatty acid amines and

d) a solubilizer selected from the group of sorbitan fatty acid esters, triglyceride or partial glyceride mixtures of saturated fatty acids and hydroxyethylamides.

2. The method of claim 1,
characterized in that
the diluted effective compound concentrate and the phospholipid concentrate are introduced into a statio mixer and a spray mixture is formed.

3. The method of claim 1,
characterized in that
the separate liquids are introduced into a mixing nozzle and a spray mixture is formed.

4. The method of claims 1 to 3,
characterized in that
the concentrates are combined from separate containers in a packing unit.

5. The method of claims 1 to 4,
characterized in that
the phospholipid employed is phosphatidyl choline or mixtures of phosphatidyl choline and phosphatidyl ethanolamine or mixtures of phosphatidyl choline/phosphatidyl ethanolamine and N-acylphosphatidyl ethanolamine.

6. The method of claims 1 to 5,
characterized in that
the phospholipid concentrate is employed in such an amount that the weight ratio of effective compound to phospholipid mixture is of from 1:1 to 1:2.

7. Packing unit for effective compound concentrates of plant protectants containing a commercially available effective compound concentrate,
characterized in that
the packing unit contains the commercially available effective compound concentrate and a liquid phospholipid concentrate in separate spaces in a weight ratio effective compound:phospholipids of from 1:0.5 to 1:5 and the phospholipid concentrate comprises

a) of from 20 to 60 weight percent based on the concentrate of phosphatidyl choline or of a mixture of phospholipides containing from 20 to 98 weight percent phosphatidyl choline and other phospholipides selected from the group hydrogenated phosphatidyl choline, phosphatidyl ethanolamine, N-acetylphosphatidyl ethanolamine, phosphatidyl inositol, phosphatidyl serine and phosphatidyl glycerol and

b) glycerin as physiologically acceptable solvent and if necessary one or more solvents selected from the group $C_1$ to $C_4$ alcohols, ethylene glycol, butylene glycol, ethylene glycol monoethylether, ethylene glycol dimethylether, ethylene glycol diethylether, diethylene glycol dimethylether, diethylene glycol monoethylether, diethylene glycol monomethylether, diethylene glycol propylether, diethylene glycol diethylether, polyethylene glycol, propylene glycols, propylene glycol monomethylether, propylene, glycol monoethylether, propylene glycol dimethylether, propylene glycol diethylether, tetrahydrofurane, dioxane dimethyl sulfoxide, 3,5,5-trime-thyl-2-cyclohexene-1-on, and

c) a non-ionogenic co-emulsifier selected from the group ethoxylates of fatty alcohols, hydrogenated castor oil, nonyl phenol or fatty acid amines and

d) a solubilizer selected from the group of sorbitan fatty acid esters, triglyceride or partial glyceride mixtures of saturated fatty acids and hydroxyethylamides.

8. The packing unit of claim 1,
characterized in that
the weight ratio of effective compound to phospholipid is from 1:1 to 1:2.

**Revendications**

1. Procédé pour produire des bouillons aqueux de pulvérisation d'agents phytosanitaires qui, outre les agents actifs, contiennent encore des phospholipides et d'autres agents auxiliaires, selon lequel on mélange entre eux des phospholipides, d'autres agents auxiliaires et des concentrés d'agents actifs du commerce et de l'eau et on épand au moyen de dispositifs usuels de pulvérisation, caractérisé en ce qu'on utilise un concentré liquide de phospholipides dans une proportion en poids agent actif: phospholipides de 1:0,5 à 1:5, qui contient

a) de 20 à 60 % en poids, rapporté au concentré, de phosphatidylcholine ou d'un mélange de phospholipides formé de 20-98 en poids de phosphatidylcholine et d'autres phospholipides appartenant au groupe formé par une phosphatidylcholine hydrogénée, une phosphatidyléthanolamine, une N-acylphosphatidyléthanolamine, un phosphatidylinositol, une phosphatidylsérine et un phosphatidylglycérol, et

b) du glycérol en tant que solvant physiologiquement sans danger, et éventuellement un ou plusieurs solvants appartenant au groupe formé par les alcools en $C_1$-$C_4$, l'éthylèneglycol, le butylèneglycol, le monoéthyléther de l'éthylèneglycol, le diméthyléther de l'éthylèneglycol, le diéthyléther de l'éthylèneglycol, le diméthyléther du diéthylèneglycol, le monoéthyléther du diéthylèneglycol, le monométhyléther du diéthylèneglycol, le propyléther du diéthylèneglycol, le diéthyléther du diéthylèneglycol, le polyéthylèneglycol, les propylèneglycols, le monométhyléther du propylèneglycol, le monoéthyléther du propylèneglycol, le diméthyléther du propylèneglycol, le diéthyléther du propylèneglycol, le tétrahydrofuranne, le dioxanne, le diméthylsulfoxyde, le triméthyl-3,5,5 cyclohexène-2 one-1, et

c) un co-émulsifiant non ionique appartenant au groupe formé par les éthoxylates d'alcools gras, l'huile de ricin hydrogénée, le nonylphénol cu des amides d'acides gras, et

d) un agent de solubilisation appartenant au groupe formé par les esters d'acides gras du sorbitan, les mélanges de triglycérides ou de glycérides partiels d'acides gras saturés et les hydroxyéthylamides.

2. Procédé selon la revendication 1, caractérisé en ce que l'on réunit le concentré dilué d'agent actif et le concentré de phospholipides dans un mélangeur statique et on forme un bouillon de pulvérisation.

3. Procédé selon la revendication 1, caractérisé en ce qu'on réunit les liquides séparés dans une buse mélangeuse et on forme un bouillon de pulvérisation.

4. Procédé selon les revendications 1 à 3, caractérisé en ce qu'on réunit les concentrés à partir de réservoirs séparés d'un élément d'emballage.

5. Procédé selon les revendications 1 à 4, caractérisé en ce qu'on utilise comme phospholipide une phosphatidylcholine ou des mélanges de phosphatidylcholine et de phosphatidyléthanolamine ou des mélanges de phosphatidylcholine/phosphatidyléthanolamine et de N-acylphosphatidyléthanolamine.

6. Procédé selon les revendications 1 à 5, caractérisé en ce qu'on utilise une quantité de concentré de phospholipides telle que la proportion en poids de l'agent actif au mélange de phospholipides s'élève de 1:1 a 1:2.

7. Elément d'emballage pour concentrés d'agent actif à base d'agents phytosanitaires contenant un concentré d'agent actif du commerce, caractérisé en ce que l'élément d'emballage contient, dans des volumes séparés l'un de l'autre, le concentré d'agent actif du commerce et un concentré de phospholipides liquide, dans une proportion en poids agent actif: phospholipides de 1:0,5 à 1:5, et le concentré de phospholipides

contient: a) de 20 à 60 % en poids, rapporté au concentré, de phosphatidylcholine ou d'un mélange de phospholipides formé de 20-98 % en poids de phosphatidylcholine et d'autres phospholipides appartenant au groupe formé par une phosphatidylcholine hydrogénée, une phosphatidyléthanolamine, une N-acylphosphatidyléthanolamine, un phosphatidylinositol, une phosphatidylsérine et un phosphatidylglycérol, et

b) du glycérol en tant que solvant physiologiquement sans danger et éventuellement un ou plusieurs solvants appartenant au groupe formé par les alcools en $C_1$-$C_4$, l'éthylèneglycol, le butylèneglycol, le monoéthyléther de l'éthylèneglycol, le diméthyléther de l'éthylèneglycol, le diéthyléther de l'éthylèneglycol, le diméthyléther du diéthylèneglycol, le monoéthyléther du diéthylèneglycol, le monométhyléther du diéthylèneglycol, le propyléther du diéthylèneglycol, le diéthyléther du diéthylèneglycol, le polyéthylèneglycol, les propylèneglycols, le monométhyléther du propylèneglycol, le monoéthyléther du propylèneglycol, le diméthyléther du propylèneglycol, le diéthyléther du propylèneglycol, le tétrahydrofuranne, le dioxanne, le diméthylsulfoxyde, le triméthyl-3,5,5 cyclohexène-2 one-1, et

c) un co-émulsifiant non ionique appartenant au groupe formé par les éthoxylates d'alcools gras, l'huile de ricin hydrogénée, le nonylphénol ou des amides d'acides gras, et

d) un agent de solubilisation appartenant au groupe formé par les esters l'acides gras du sorbitan, les mélanges de triglycérides ou de glycérides partiels d'acides gras saturés et les hydroxyéthylamides.

8. Elément d'emballage selon la revendication 7, caractérisée en ce que la proportion en poids agent actif: phospholipides s'élève de 1:1 à 1:2.